# EUROPÄISCHE PATENTSCHRIFT

(11) **EP 3 210 251 B1**
(45) Veröffentlichungstag und Bekanntmachung des Hinweises auf die Patenterteilung: **26.02.2020**
(21) Anmeldenummer: 15766812.0
(22) Anmeldetag: 18.09.2015
(51) Int. Cl.: H01M 2/10

(54) **GEHÄUSE MIT EINEM BATTERIEFACH**
HOUSING COMPRISING A BATTERY COMPARTMENT
BOÎTIER POURVU D'UN CASIER DE BATTERIES PRIMAIRES OU SECONDAIRES

(30) Priorität: 22.10.2014 DE 102014221464
(43) Veröffentlichungstag der Anmeldung: 30.08.2017
(73) Patentinhaber: InterDigital CE Patent Holdings, 75017 Paris (FR)
(72) Erfinder: LINDEMANN, Robert, 65193 Wiesbaden (DE)
(74) Vertreter: Schmidt-Uhlig, Thomas
(86) Internationale Anmeldenummer: PCT/EP2015/071469
(87) Internationale Veröffentlichungsnummer: WO 2016/062469

(56) Entgegenhaltungen:
- EP-A1- 1 850 406
- JP-A- S6 196 655
- JP-A- 2004 039 598
- US-A1- 2011 293 116

## Beschreibung

### Technisches Gebiet

Die vorliegende Erfindung betrifft ein Gehäuse mit einem Batteriefach, das mit einem Deckel verschließbar ist. Insbesondere betrifft die Erfindung ein derartiges Gehäuse für ein tragbares elektrisches Gerät.

### Hintergrund

Viele tragbare elektrische Geräte sind batteriebetrieben. Bei den Batterien handelt es sich entweder um primäre Batterien, welche die elektrische Energie durch eine chemische Reaktion erzeugen, oder um sekundäre Batterien, die zunächst von einer anderen Stromquelle aufgeladen werden und die gespeicherte elektrische Energie wieder abgeben können. Im ersten Fall müssen die Batterien ersetzt werden, wenn sie erschöpft sind. Dasselbe gilt im zweiten Fall, wenn das elektrische Gerät keinen externen Ladeanschluss vorsieht. Dies ist beispielsweise bei Fernbedienungen für Geräte der Unterhaltungselektronik oder elektrischen Uhren häufig der Fall. Die Batterien sind bei solchen Geräten in der Regel in einem Batteriefach untergebracht, das sich durch Abnehmen, Herausschieben oder Verschwenken eines Deckels öffnen lässt. Ist das Batteriefach geöffnet, sind die Batterien für den Benutzer zugänglich. Der Benutzer kann dann die Batterien aus dem Batteriefach entnehmen und durch neue beziehungsweise aufgeladene Batterien ersetzen. Allerdings sind die genannten Batteriefächer üblicherweise sehr eng, um Platz im Gehäuse des Gerätes zu sparen. Außerdem müssen erschöpfte Batterien aus dem engen Gehäuse gegen die Klemmkraft von federnden elektrischen Kontakten entnommen werden. Diese Aufgabe fällt Personen mit alters- oder krankheitsbedingten eingeschränkten manuellen Fertigkeiten durchaus nicht leicht. Die vorliegende Erfindung schlägt deshalb ein Gehäuse mit einem Batteriefach vor, welches diese Aufgabe erleichtert.

JP S61-96655 A beschreibt ein Batteriefach für ein mobiles Gerät. Ein Ende eines Bandes ist am Öffnungsumfang des Batteriefachs befestigt, während das andere Ende des Bandes an einem Deckel des Fachs befestigt ist. Während eine Batterie in das Fach eingesetzt wird, wird das Band durch die Batterie gegen den inneren Boden und die inneren Seitenflächen des Fachs gedrückt. Wenn der Deckel geöffnet wird und der Benutzer am Band zieht, wird die Batterie durch die Zugkraft des Bandes aus dem Batteriefach entfernt. Auf diese Weise wird die Entnahme der Batterie erleichtert.

### Zusammenfassung der Erfindung

Es wird ein Gehäuse mit einem Batteriefach vorgeschlagen, das mit einem schwenkbaren Deckel verschließbar ist. Ein Streifen verbindet den Deckel mit dem Gehäuse so, dass bei eingelegter Batterie der Streifen unter der Batterie liegt. Der Deckel ist von dem Gehäuse abnehmbar und mittels des Streifens unverlierbar mit dem Gehäuse verbunden. Der Streifen weist eine hinreichende Verwindungssteifigkeit auf, um den Deckel beim Schließen in eine korrekte Stellung in Bezug auf das Batteriefach zu führen.

Bei einem Ausführungsbeispiel ist der Streifen an einer Seitenkante des Deckels und innerhalb des Batteriefaches an einer ersten Seitenwand des Batteriefaches, die einer zweiten Seitenwand des Batteriefaches gegenüber liegt, an welcher der Deckel angelenkt ist, an dem Gehäuse befestigt ist.

Bei einer zweckmäßigen Ausführungsform weist der Deckel Arme auf, die so in Öffnungen in dem Batteriefach eingreifen, dass der Deckel mit dem Gehäuse bis zu einem vorgegebenen Öffnungswinkel des Deckels verschwenkbar mit dem Gehäuse verbunden ist. Erst wenn der Deckel über den vorbestimmten Öffnungswinkel hinaus verschwenkt wird, ist der Deckel von dem Gehäuse abnehmbar. Wenn der Deckel von dem Gehäuse gelöst ist, dann dient er als Griffstück für einen Benutzer, um die Batterien mittels des Streifens aus dem Batteriefach herauszuheben.

Vorteilhafterweise können die Arme zu ihrem freien Ende hin konisch ausgebildet sein, um das Einsetzen der Arme in die zugehörigen Öffnungen in dem Gehäuse zu erleichtern.

Der Deckel kann durch Federmittel in die geöffnete Stellung vorgespannt sein, um das Öffnen des Deckels zu erleichtern, weil er nach dem Lösen eines Verschlusses in eine geöffnete Stellung aufspringt.

Bei einem vorteilhaften Ausführungsbeispiel weist der Deckel eine rutschsichere Oberflächenstruktur auf, die Griffflächen bietet. Die rutschsichere Oberflächenstruktur vermindert die Presskraft, die ein Benutzer mit den Fingern aufbringen muss, um den Deckel beim Herausnehmen der Batterien festzuhalten. Zweckmäßigerweise ist die rutschsichere Oberflächenstruktur beidseitig auf dem Deckel vorhanden.

Bei einem Ausführungsbeispiel ist der Streifen ein aus mehreren Segmenten aufgebauter Kunststoffstreifen, die mit Gelenken miteinander verbunden sind. In diesem Fall sind die Gelenke vorzugsweise federnd ausgebildet und spannenden Kunststoffstreifen in eine gestreckte Stellung vor. In einer vorteilhaften Weiterbildung sind die Gelenke als Filmgelenke ausgebildet.

Mit Vorteil weist das Batteriefach eine Aussparung auf, die den Kunststoffstreifen bei eingelegter Batterie aufnimmt, so dass die Wand- bzw. Bodenfläche des Batteriefaches eben ist.

Bei einem vorteilhaften Ausführungsbeispiel ist der Deckel mit einer Positionierrippe versehen, die dem Benutzer gleichzeitig als Haltefläche für den Deckel bei dem Herausnehmen der Batterien dient.

Mit Vorteil kann der Streifen einen Haltesteg aufweisen, der die Batterie festhält. Der Haltesteg verhindert, dass die Batterien herabfallen, sobald sie aus dem Batteriefach herausgehoben sind.

Weitere Vorteile und Merkmale werden in der ausführlichen Beschreibung von mehreren Ausführungsbeispielen des vorgeschlagenen Gehäuses offenbart.

### Kurze Beschreibung der Zeichnung

In der Zeichnung sind Ausführungsbeispiele der Erfindung dargestellt. Es zeigen:
Figur 1A einen Ausschnitt aus einem erfindungsgemäßen Gehäuse mit einem Batteriefach in einer perspektivischen Draufsicht;
Figur 1B das Batteriefach aus Figur 1A mit abgenommenem Deckel in einer Querschnittsansicht;
Figur 1C einen Ausschnitt einer abgewandelten Ausführungsform des Batteriefaches aus Figur 1B;
Figuren 2A bis 2C eine abgewandelte Ausführungsform des Batteriefaches aus Figur 1A in einer Querschnittsansicht;
Figur 3 eine weitere abgewandelte Ausführungsform des Batteriefaches aus Figur 1A in einer Querschnittsansicht; ; und
Figur 4 ein mobiles elektronisches Gerät mit einem erfindungsgemäßen Gehäuse.

In den Figuren tragen gleiche und ähnliche Teile dieselben bzw. ähnliche Zeichen.

### Ausführliche Beschreibung

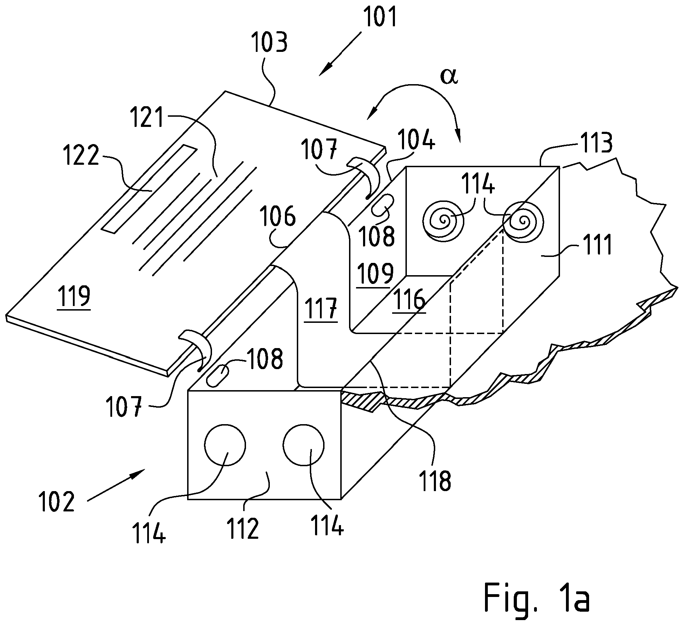

Figur 1A zeigt einen Ausschnitt 101 aus einem erfindungsgemäßen Gehäuse mit dem zugehörigen Batteriefach 102. Die in Figur 1A nicht dargestellten Teile des Gehäuses sind konventionell und für die vorliegende Erfindung nicht weiter relevant. Das quaderförmige Batteriefach 102 weist einen schwenkbaren Deckel 103 auf, der an einer Oberkante 104 des Batteriefaches 102 angeordnet ist. An einer der Oberkante 104 zugewandten Seitenkante 106 des Deckels 103 weist der Deckel 103 zwei Arme 107 auf, die in zugeordnete Öffnungen 108 eingreifen und im Zusammenwirken mit den Öffnungen 108 Scharniergelenke bilden, um welche der Deckel 103 verschwenkbar ist. Darüber hinaus dienen die Arme bei geschlossenem Deckel der Verriegelung des Deckels. Das Batteriefach 102 weist eine erste Seitenwand 111 auf, welche einer zweiten Seitenwand 109 gegenüberliegt, sowie zwei Stirnseiten 112, 113, die mit elektrischen Kontakten 114 versehen sind. Die Öffnungen 108 sind in der zweiten Seitenwand 109 angeordnet. Schließlich ist das Batteriefach 102 mit einem Boden 116 versehen. Eine Besonderheit des Batteriefaches 102 ist ein Streifen 117, der sich von einer Oberkante 118 der Seitenwand 111 entlang des Bodens 116 bis zu der Seitenkante 106 des Deckels 103 erstreckt. Der Streifen 117 ist mit seinen jeweiligen Enden an der Oberkante 118 beziehungsweise an der Seitenkante 106 des Deckels 103 befestigt. Der Streifen 117 ist in seiner Längsrichtung verwindungssteif ausgebildet, aber in seiner Querrichtung verformbar, so dass er sich der Kontur des Innenraumes des Batteriefaches 102 anpasst.

Auf seinen beiden Hauptflächen 119 weist der Deckel 103 strukturierte Griffflächen 121 auf, die den Fingern eines Benutzers rutschsicheren Halt bieten. Die dem Innenraum des Batteriefaches zugewandte Hauptfläche 119 des Deckels 103 weist eine Rastleiste 122 auf, mit welcher der Deckel 103 im geschlossenen Zustand einrastet.

Die Arme 107 sind so ausgebildet, dass der Deckel 103 mit dem Gehäuse bis zu einem vorgegebenen Öffnungswinkel α von zum Beispiel 120° des Deckels 103 verschwenkbar verbunden ist. Selbstverständlich kann der genannte vorgegebene Öffnungswinkel α in anderen Ausführungsbeispielen kleiner oder größer gewählt werden. Erst wenn der Deckel 103 über den vorbestimmten Öffnungswinkel α hinaus verschwenkt wird, kommen die Arme 107 aus den Öffnungen 108 frei und der Deckel 103 ist von dem Gehäuse abnehmbar. In Figur 1A ist das dadurch angedeutet, dass der Deckel 103 in einem geringen Abstand von dem Batteriefach 102 dargestellt ist, und die Arme 107 nicht mehr in die Öffnungen 108 eingreifen.

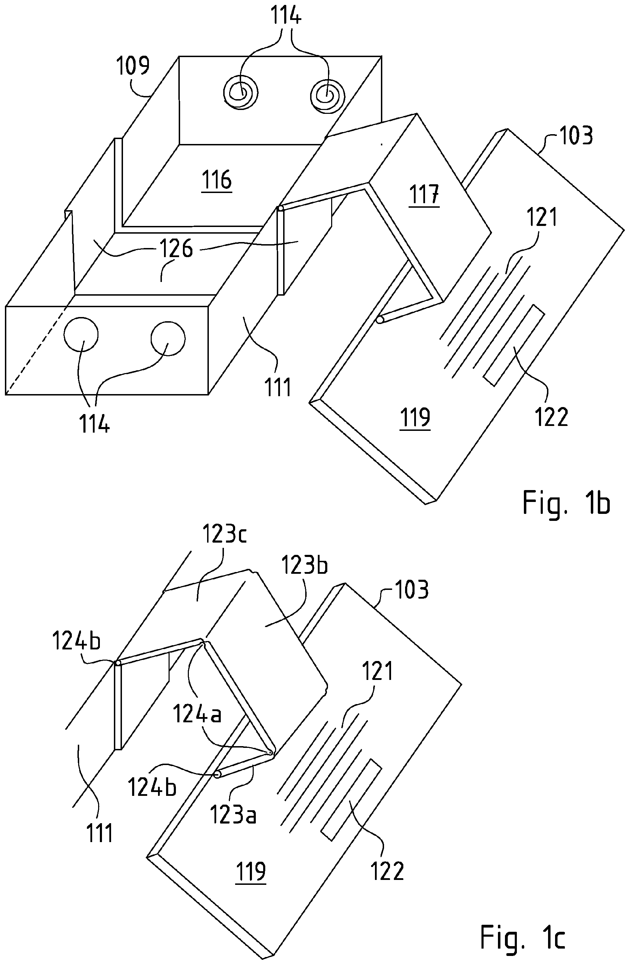

Sobald die Arme 107 aus den Öffnungen 108 freigekommen sind, kann der Benutzer den Deckel nach oben und nach rechts bewegen, bis er beispielsweise die in Figur 1B dargestellte Stellung erreicht. Es ist offensichtlich, dass im Zuge dieser Öffnungsbewegung die in dem Batteriefach 102 eingelegten Batterien (in den Figuren 1A und 1B nicht dargestellt) von dem Streifen 117 mitgenommen und aus dem Batteriefach 102 gehoben werden. Der Deckel 103 bietet dem Benutzer für diese Bewegung große und rutschsichere Griffflächen 121 an, so dass auch ein Benutzer mit eingeschränkter Beweglichkeit der Finger beziehungsweise eingeschränkten manuellen Fertigkeiten die Klemmkraft, welche die elektrischen Kontakte 114 auf die Batterien ausüben, ohne Mühe überwinden kann. Diese Anordnung verlangt von einem Benutzer viel weniger Kraft in den Fingern, um die Batterien aus dem Batteriefach zu entnehmen, als dies bei konventionellen Batteriefächern der Fall ist. Das ist für alle Personen, die mit ihren Fingern nur geringe Kräfte ausüben können, ein erheblicher Vorteil.

In Figur 1B ist der Streifen 117 wie ein starres U-Profil dargestellt. Grundsätzlich ist eine solche Ausführungsform der Erfindung denkbar. Ein starres U-Profil hat jedoch den Nachteil, dass es eine hohe Bruchgefahr birgt, insbesondere bei Personen deren manuelle Fertigkeiten eingeschränkt sind und die gerade eine Zielgruppe für das vorgeschlagene Gehäuse bilden.

Aus diesem Grund ist in einem anderen in Figur 1C ausschnittsweise dargestellten Ausführungsbeispiel der Streifen 117 aus drei einzelnen Segmenten 123a, 123b und 123c ausgebildet, die untereinander mit als Filmgelenken 124a ausgebildeten Gelenken verbunden sind sowie durch Gelenke 124b an der Seitenwand 111 beziehungsweise an dem Deckel 103 angelenkt sind. Bei einem Ausführungsbeispiel sind auch die Gelenke 124b als Filmgelenke ausgebildet. Bei den Ausführungsbeispielen mit einem aus Segmenten 123a, 123b und 123c aufgebauten Streifen, ist der Streifen 117 nur im Bereich der Gelenke bzw. Filmgelenke 124a, 124b verformbar.

Jeweils ein Segment bildet einen der beiden Schenkel beziehungsweise den Steg des U-Profils. Für einen solchen aus Segmenten aufgebauten Kunststoffstreifen 117 besteht nur eine sehr geringe Bruchgefahr. Trotzdem erfüllt er die Funktion, eine eingelegte Batterie aus dem Batteriefach 102 mithilfe des Deckels 103 herauszuheben, gleichermaßen gut.

Das Einlegen von Batterien in das Batteriefach erfolgt durch einen umgekehrten Bewegungsablauf wie das Herausnehmen der Batterien. Der Deckel 103 wird in seine Ausgangsposition zurückgeführt, wobei sich der Streifen 117 in den Innenraum des Batteriefaches hinein faltet. Die Batterien lassen sich dann von oben in das Batteriefach 102 hineindrücken, was wesentlich geringere manuelle Fertigkeiten erfordert, als das Herausnehmen der Batterien aus einem engen Batteriefach. Wenn die Batterien eingelegt sind, werden die Arme 107 des Deckels 103 in die Öffnungen 108 eingeführt und der Deckel wird geschlossen, wobei die Rastleiste 122 einrastet und den Deckel 103 geschlossen hält. Der verwindungssteife Streifen 117 erleichtert das Einführen der Arme 107 in die Öffnungen 108, weil er dem Benutzer hilft, den Deckel bzw. die Arme 107 in die richtige Stellung zu führen. Dadurch ist auch das korrekte Schließen des Deckels vereinfacht.

Der Umstand, dass der Deckel 103 nach dem Herausnehmen der Batterien lose aber unverlierbar an dem Streifen 117 hängt, veranlasst den Benutzer, bevor die Batterien eingesetzt werden, zunächst den Deckel wieder in seine Betriebsstellung zu bringen, d.h. die Arme 107 in die Öffnungen 108 einzuführen. Dabei legt sich der Streifen 117 in das Batteriefach hinein und kommt dadurch unter den anschließend eingesetzten Batterien zu liegen. Die Arme 107 können zudem so ausgestaltet sein, dass auch bei einer leicht versetzten Lage des Deckels bezüglich des Batteriefachs beim Schließen des Deckels dieser automatisch korrekt positioniert wird. Hierzu sind die Arme 107 beispielsweise konisch geformt. Selbst wenn der Deckel vor dem Einlegen der Batterien nicht vollständig in die Betriebsstellung gebracht wurde, werden der durch die eingelegten Batterien 127 niedergedrückte Steg 129 und die Arme 107 zu einer korrekten Positionierung des Deckels 103 führen.

In einem anderen Ausführungsbeispiel ist der Streifen 117 als Textilband ausgeführt, das in seiner Querrichtung hinreichend flexibel ist, um sich an die Innenkontur des Batteriefaches anpassen zu können und gleichzeitig eine hinreichende Verwindungssteifigkeit aufweist, um den Deckel 103 in die richtige Position zu führen, damit die Arme 107 sicher in die Öffnungen 108 finden.

In der Darstellung des Batteriefaches in Figur 1B ist eine Vertiefung 126 in dem Innenraum sichtbar, welche so ausgestaltet ist, dass die Vertiefung 126 den Streifen 117 vollständig aufnimmt und Boden und Seitenwände des Batteriefaches eben sind. Auf diese Weise ist gewährleistet, dass eingelegte Batterien in dem Batteriefach nicht klappern.

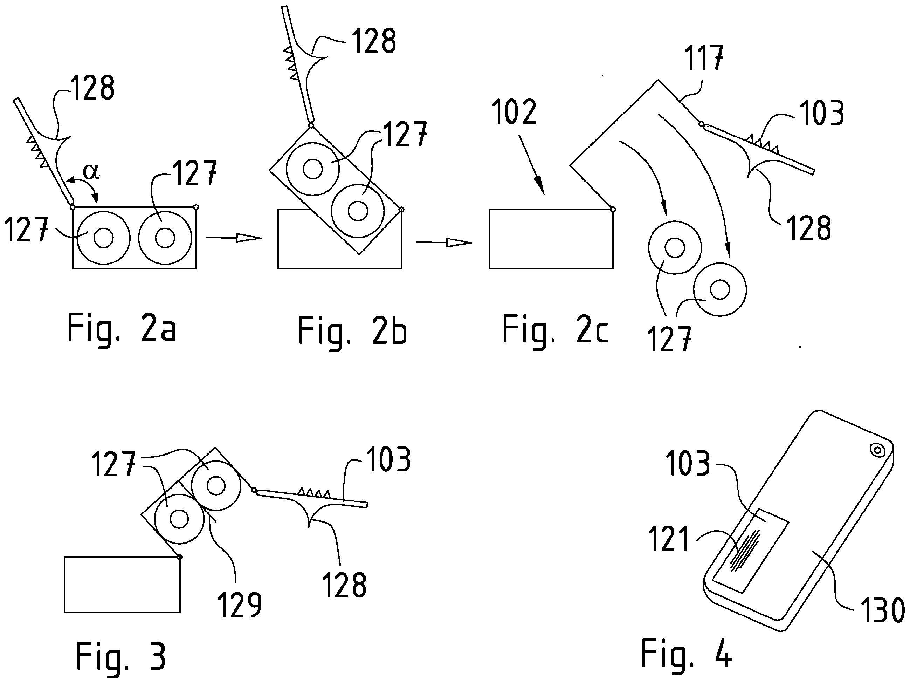

In den Figuren 2A bis 2C ist das Batteriefach des erfindungsgemäßen Gehäuses noch einmal in einer Querschnittsansicht dargestellt. In Figur 2A sind zwei Batterien 127 gezeigt, die im Inneren des Batteriefaches 102 liegen. Der Deckel 103 ist in eine geöffnete Stellung aufgeschwenkt. In Figur 2B ist der Deckel 103 von dem Batteriefach gelöst und nach oben bewegt, wobei der Streifen 117 die Batterien aus dem Batteriefach heraushebt. Schließlich ist in Figur 2C dargestellt wie die Batterien aus dem Streifen 117 einfach herausnehmbar sind.

Außerdem ist der Deckel 103 bei dem in den Figuren 2A bis 2C dargestellten Ausführungsbeispiel mit einer Positionierrippe 128 versehen, welche die eingelegten Batterien zusätzlich in dem Batteriefach positioniert und fixiert und dabei gleichzeitig die Greifbarkeit des Deckels verbessert.

Bei einer abgewandelten Ausführungsform der vorliegenden Erfindung ist der Streifen 117 mit einem zusätzlichen Haltesteg 129 versehen, um zu verhindern, dass die Batterien 127 einfach aus dem Streifen 117 herausfallen.

In einer vorteilhaften Weiterbildung ist der Streifen 117 vorgespannt, so dass der Streifen 117 gemeinsam mit dem Haltesteg 127 eine geringe Klemmkraft auf die Batterien 124 ausübt. Diese Klemmkraft ist jedoch geringer als die von den elektrischen Kontakten 114 ausgeübte Klemmkraft. Außerdem kann der Benutzer die Batterien von dem Streifen 117 einfach abnehmen, weil sich die Batterien nicht mehr in dem engen Batteriefach befinden und deren Stirnseiten frei zugänglich sind, so dass der Benutzer die Batterien einfach fassen kann.

Schließlich ist in einem weiteren Ausführungsbeispiel der Deckel 103 durch Federmittel in die geöffnete Stellung vorgespannt. Wenn ein Löseknopf gedrückt wird, springt der Deckel 103 auf, wodurch die Anforderungen an die manuellen Fertigkeiten zum Wechseln der Batterien noch weiter gesenkt werden. Als Federmittel kommt zum Beispiel ein elastischer Schaumstoff in Frage, der beim Schließen des Deckels zusammengedrückt wird, aber auch ein geringfügig vorgespanntes Filmscharnier zwischen Streifen 117 und Deckel 103.

In einer weiteren vorteilhaften Ausgestaltung ist im Deckel 103 ein Indikator für die korrekte Positionierung der Batterie oder der Batterien angebracht. Da sich, anders als bei den bisher üblichen losen Batteriefachdeckeln, der Deckel stets in der richtigen Lage bezüglich des Batteriefachs befindet, weist der Indikator stets auf die Richtige Polung der Batterie oder der Batterien hin. Darüber hinaus ist ein im Deckel angebrachter Indikator für Personen mit einer Beeinträchtigung des Sehvermögens besser erkennbar als ein Indikator am Boden des Batteriefachs. Hierzu kann der Indikator auch tast- oder fühlbar ausgelegt sein, was bei Indikatoren, die sich am Boden enger Batteriefächer befinden, schlecht möglich ist.

Figur 4 zeigt ein Smartphone 130 als Beispiel für ein elektronisches Gerät, welches ein erfindungsgemäßes Gehäuse aufweist.

In der Beschreibung der Ausführungsbeispiele ist zwar stets von Batterien die Rede. Die vorliegende Erfindung ist jedoch grundsätzlich auch für Treibstoffbehälter für Brennstoffzellen in mobilen elektronischen Geräten anwendbar. In diesem Sinn ist der Begriff "Batterie" auch als Treibstoffbehälter in dem genannten weiteren Sinn zu verstehen.

### Bezugszeichenliste

- 101: Ausschnitt
- 102: Batteriefach
- 103: Deckel
- 104: Oberkante des Batteriefaches
- 106: Seitenkante des Deckels
- 107: Arme
- 108: Öffnungen
- 109: zweite Seitenwand des Batteriefaches
- 111: erste Seitenwand des Batteriefaches
- 112,113: Stirnseiten
- 114: elektrische Kontakte
- 116: Boden
- 117: Streifen
- 118: Oberkante von Seitenwand 111
- 119: Hauptflächen des Deckels 103
- 121: Griffflächen
- 122: Rastleiste
- 123a-c: Segmente
- 124a,b: Filmgelenke
- 126: Vertiefung
- 127: Batterien
- 128: Positionierrippe
- 129: Haltesteg
- 130: Smartphone

## Patentansprüche

1. Gehäuse mit einem Batteriefach (102), das mit einem schwenkbaren Deckel (103) verschließbar ist, wobei der Deckel (103) von dem Gehäuse abnehmbar ist und wobei ein Streifen (117), der bei eingelegter Batterie (127) unter der Batterie (127) liegt, den Deckel (103) unverlierbar mit dem Gehäuse verbindet, **dadurch gekennzeichnet, dass** der Streifen (117) eine hinreichende Verwindungssteifigkeit aufweist, um den Deckel (103) beim Schließen in eine korrekte Stellung in Bezug auf das Batteriefach (102) zu führen.

2. Gehäuse nach Anspruch 1, **dadurch gekennzeichnet, dass** der Streifen (117) an einer Seitenkante (106) des Deckels (103) befestigt ist und innerhalb des Batteriefaches (102) an einer ersten Seitenwand (111) des Batteriefaches (102), die einer zweiten Seitenwand (109) des Batteriefaches (102) gegenüber liegt, an welcher der Deckel (103) angelenkt ist, an dem Gehäuse befestigt ist.

3. Gehäuse nach Anspruch 1, **dadurch gekennzeichnet, dass** der Deckel Arme (107) aufweist, die so in Öffnungen (108) in dem Batteriefach (102) eingreifen, dass der Deckel mit dem Gehäuse bis zu einem vorgegebenen Öffnungswinkel (α) des Deckels verschwenkbar mit dem Gehäuse verbunden ist und dass der Deckel durch ein Verschwenken über den vorbestimmten Öffnungswinkel (α) hinaus von dem Gehäuse abnehmbar ist.

4. Gehäuse nach Anspruch 3, **dadurch gekennzeichnet, dass** die Arme (107) zu ihrem freien Ende hin konisch ausgebildet sind.

5. Gehäuse nach Anspruch 1, **dadurch gekennzeichnet, dass** der Deckel (103) durch Federmittel in die geöffnete Stellung vorgespannt ist.

6. Gehäuse nach Anspruch 1, **dadurch gekennzeichnet, dass** der Streifen (117) ein aus mehreren Segmenten (123a,b,c) aufgebauter Kunststoffstreifen ist, die mit Gelenken (124a) untereinander verbunden sind.

7. Gehäuse nach Anspruch 6, **dadurch gekennzeichnet, dass** die Gelenke (124a) federnd ausgebildet sind und den Kunststoffstreifen in eine gestreckte Stellung vorspannen.

8. Gehäuse nach Anspruch 1, **dadurch gekennzeichnet, dass** das Batteriefach (102) eine Aussparung (126) aufweist, die den Streifen (117) bei eingelegter Batterie aufnimmt.

9. Gehäuse nach Anspruch 1, **dadurch gekennzeichnet, dass** der Deckel (103) mit einer Positionierrippe (128) versehen ist.

10. Gehäuse nach Anspruch 1, **dadurch gekennzeichnet, dass** der Streifen (117) einen Haltesteg (129) aufweist, der die Batterie festhält.

11. Fernbedienung mit einem Gehäuse mit einem Batteriefach (102), das mit einem schwenkbaren Deckel (103) verschließbar ist, wobei der Deckel (103) von dem Gehäuse abnehmbar ist und wobei ein Streifen (117), der bei eingelegter Batterie (127) unter der Batterie (127) liegt, den Deckel (103) unverlierbar mit dem Gehäuse verbindet, **dadurch gekennzeichnet, dass** der Streifen (117) eine hinreichende Verwindungssteifigkeit aufweist, um den Deckel (103) beim Schließen in eine korrekte Stellung in Bezug auf das Batteriefach (102) zu führen.

12. Fernbedienung nach Anspruch 11, **dadurch gekennzeichnet, dass** der Deckel Arme (107) aufweist, die so in Öffnungen (108) in dem Batteriefach (102) eingreifen, dass der Deckel mit dem Gehäuse bis zu einem vorgegebenen Öffnungswinkel (α) des Deckels verschwenkbar mit dem Gehäuse verbunden ist und dass der Deckel durch ein Verschwenken über den vorbestimmten Öffnungswinkel (α) hinaus von dem Gehäuse abnehmbar ist.

13. Fernbedienung nach Anspruch 11, **dadurch gekennzeichnet, dass** der Deckel (103) durch Federmittel in die geöffnete Stellung vorgespannt ist.

14. Fernbedienung nach Anspruch 11, **dadurch gekennzeichnet, dass** der Streifen (117) ein aus mehreren Segmenten (123a,b,c) aufgebauter Kunststoffstreifen ist, die mit Gelenken (124a) untereinander verbunden sind.

## Claims

1. Housing comprising a battery compartment (102), which can be closed by a pivotable cover (103), wherein the cover (103) is detachable from the housing, and wherein a strip (117), when a battery (127) has been inserted, lies underneath the battery (127) and captively connects the cover (103) to the housing, **characterized in that** the strip (117) has a torsion resistance that is sufficient to guide the cover (103) into a correct position relative to the battery compartment (102) on closing.

2. Housing according to claim 1, **characterized in that** the strip (117) is fastened to a side edge (106) of the cover (103) and within the battery compartment (102) is fastened to the housing on a first side wall (111) of the battery compartment (102), being opposite to a second side wall (109) of the battery compartment (102), at which the cover (103) is hinged.

3. Housing according to claim 1, **characterized in that** the cover has arms (107) which engage in openings (108) in the battery compartment (102) in such a way that the cover is pivotably connected to the housing up to a predetermined opening angle (α) of the cover and **in that** the cover can be detached from the housing by pivoting beyond the predetermined opening angle (α).

4. Housing according to claim 3, **characterized in that** the arms (107) are designed conical towards their free end.

5. Housing according to claim 1, **characterized in that** the cover (103) is prestressed by spring means into the open position.

6. Housing according to claim 1, **characterized in that** the strip (117) is a plastic strip composed of a plurality of segments (123a,b,c) which are connected to one another by joints (124a).

7. Housing according to claim 6, **characterized in that** the joints (124a) are resilient and bias the plastic strips into a stretched position.

8. Housing according to claim 1, **characterized in that** the battery compartment (102) has a recess (126) which receives the strip (117) when the battery is inserted.

9. Housing according to claim 1, **characterized in that** the cover (103) is provided with a positioning rib (128).

10. Housing according to claim 1, **characterized in that** the strip (117) has a fixing bar (129) which holds the battery.

11. Remote control with a housing comprising a battery compartment (102), which can be closed by a pivotable cover (103), wherein the cover (103) is detachable from the housing, and wherein a strip (117), when a battery (127) has been inserted, lies underneath the battery (127) and captively connects the cover (103) to the housing, **characterized in that** the strip (117) has a torsion resistance that is sufficient to guide the cover (103) into a correct position relative to the battery compartment (102) on closing.

12. Remote control according to claim 11, **characterized in that** the cover has arms (107) which engage in openings (108) in the battery compartment (102) in such a way that the cover is pivotably connected to the housing up to a predetermined opening angle (α) of the cover and **in that** the cover can be detached from the housing by pivoting beyond the predetermined opening angle (α).

13. Remote control according to claim 11, **characterized in that** the cover (103) is prestressed by spring means into the open position.

14. Remote control according to claim 11, **characterized in that** the strip (117) is a plastic strip composed of a plurality of segments (123a,b,c), which are connected to one another by joints (124a).

## Revendications

1. Logement avec un compartiment de batterie (102) qui peut être fermé par un couvercle pivotant (103), dans lequel le couvercle (103) peut être retiré du logement et dans lequel une patte (117) qui se situe sous la batterie (127) en cas de batterie insérée (127) connecte le couvercle (103) au logement de manière imperdable, **caractérisé en ce que** la patte (117) présente une rigidité suffisante pour guider le couvercle (103) lors de la fermeture dans une position correcte par rapport au compartiment de batterie (102).

2. Logement selon la revendication 1, **caractérisé en ce que** la patte (117) est fixée à une arête latérale (106) du couvercle (103) et est fixée au logement au sein du compartiment de batterie (102) sur une première paroi latérale (111) du compartiment de batterie (102) qui est en face d'une seconde paroi latérale (109) du compartiment de batterie (102) à laquelle le couvercle (103) est articulé.

3. Logement selon la revendication 1, **caractérisé en ce que** le couvercle présente des bras (107) qui s'engrènent dans des ouvertures (108) dans le compartiment de batterie (102) de sorte que le couvercle est connecté au logement jusqu'à un angle d'ouverture prédéfini (α) du couvercle de manière pivotante avec le logement et que le couvercle peut être retiré du logement par un pivotement au-delà de l'angle d'ouverture prédéfini (α).

4. Logement selon la revendication 3, **caractérisé en ce que** les bras (107) sont réalisés de manière conique vers leur extrémité libre.

5. Logement selon la revendication 1, **caractérisé en ce que** le couvercle (103) est précontraint dans la position ouverte par des moyens de ressort.

6. Logement selon la revendication 1, **caractérisé en ce que** la patte (117) est une patte en plastique constituée de plusieurs segments (123a,b,c) qui sont connectés entre eux avec des articulations (124a).

7. Logement selon la revendication 6, **caractérisé en ce que** les articulations (124a) sont réalisées de manière élastique et précontraignent la patte en plastique dans une position étirée.

8. Logement selon la revendication 1, **caractérisé en ce que** le compartiment de batterie (102) présente un évidement (126) qui reçoit la patte (117) en cas de batterie insérée.

9. Logement selon la revendication 1, **caractérisé en ce que** le couvercle (103) est pourvu d'une nervure de positionnement (128).

10. Logement selon la revendication 1, **caractérisé en ce que** la patte (117) présente une entretoise de maintien (129) qui retient la batterie.

11. Télécommande avec un logement avec un compartiment de batterie (102) qui peut être fermé par un couvercle pivotant (103), dans laquelle le couvercle (103) peut être retiré du logement et dans laquelle une patte (117) qui se situe sous la batterie (127) en cas de batterie insérée (127) connecte le couvercle (103) au logement de manière imperdable, **caractérisée en ce que** la patte (117) présente une rigidité suffisante pour guider le couvercle (103) lors de la fermeture dans une position correcte par rapport au compartiment de batterie (102).

12. Télécommande selon la revendication 11, **caractérisée en ce que** le couvercle présente des bras (107) qui s'engrènent dans des ouvertures (108) dans le compartiment de batterie (102) de sorte que le couvercle est connecté au logement jusqu'à un angle d'ouverture prédéfini (α) du couvercle de manière pivotante avec le logement et que le couvercle peut être retiré du logement par un pivotement au-delà de l'angle d'ouverture prédéfini (α).

13. Télécommande selon la revendication 11, **caractérisée en ce que** le couvercle (103) est précontraint dans la position ouverte par des moyens de ressort.

14. Télécommande selon la revendication 11, **caractérisée en ce que** la patte (117) est une patte en plastique constituée de plusieurs segments (123a,b,c) qui sont connectés entre eux avec des articulations (124a).
